# EUROPEAN PATENT SPECIFICATION

(11) **EP 4 000 723 B1**
(45) Date of publication and mention of the grant of the patent: **09.07.2025**
(21) Application number: 20208837.3
(22) Date of filing: 20.11.2020
(51) Int. Cl.: B01J 4/00, B01D 53/18, B01D 53/00, B01D 5/00

(54) **DEVICE AND PROCESS FOR PREPARING A FEED STREAM FOR SOLUTION POLYMERIZATION**
VORRICHTUNG UND VERFAHREN ZUR HERSTELLUNG EINES ZULAUFSTROMS ZUR LÖSUNGSPOLYMERISIERUNG
DISPOSITIF ET PROCÉDÉ DE PRÉPARATION D'UN FLUX D'ALIMENTATION POUR LA POLYMÉRISATION DE SOLUTION

(43) Date of publication of application: 25.05.2022
(73) Proprietor: Borealis AG, 1020 Vienna (AT)
(72) Inventor: AL-HAJ ALI, Mohammad, 06850 Kulloo (FI); SLEIJSTER, Henry, 6161 Sittard-Geleen (NL); SATTAR, Mubashar, 06850 Kullo (FI); AJELLAL, Noureddine, 06850 Kullo (FI); WEBER, Charlotta, 11320 Stockholm (FI)
(74) Representative: Kador & Partner Part mbB

(56) References cited:
- EP-A1- 2 848 635
- EP-A2- 1 179 359
- WO-A1-2011/011427
- WO-A1-2015/078815
- WO-A1-2019/162445
- WO-A1-96/27634
- WO-A2-2009/070261
- US-A1- 2018 251 582

## Description

The present invention is concerned with a device and a process for preparing a feed stream for solution polymerization.

### Background of the invention

In solution polymerization processes it is necessary that all reactants are completely absorbed, i.e. solved, in the solvent upstream of the reactor. Therefore, reactant(s) and solvent(s) are typically brought together, mixed and solved before they are introduced into the polymerization reactor. Such process is generally understood as the preparation of the feed stream of a solution polymerization reactor.

### Problem to be solved

The feed stream of a solution polymerization reactor can be prepared by mixing fresh solvent as well as fresh reactants. However, parts of the mixture leaving the reactor are commonly recycled and introduced into the preparation of the feed stream again. Such setup has the advantage of recycling not only material, but also energy, as the recycled streams still provide certain temperatures and pressures besides the unreacted reactants and solvent comprised therein.

However, these recycle streams also have a certain amount of components, the concentration of which should be controlled, i.e. ideally reduced. One category of such components comprises volatile impurities. Not removing these impurities can lead to accumulation thereof upon recycling. Such accumulation can lead to disturbance in the process and offset of the reactor control. Therefore, it is a general object to remove such volatile impurities in the feed preparation step. Another category comprises hydrogen, which is usually used as a chain transfer agent in polymerization processes. For certain polymerization products it is needed to control (i.e. at least partially remove) the amount of hydrogen in the feed stream to prevent shifting of the product away from the desired property set and optimal operating window/settings.

Furthermore, these recycle streams typically consist of condensed products (liquid) and uncondensed products (vapour). Volatile impurities and hydrogen are typically present in the vapour phase, but can also be present in the liquid phase. Removing volatile components from the liquid phase or a combined liquid/gaseous phase is usually done by simply venting the volatile components off, i.e. by letting the volatiles evaporated upon a sudden reduction of pressure. However, in case of solution polymerization also volatile reactants are present in the recycle streams such as ethylene or propylene. Hence, simply venting off above-mentioned volatile components would inevitably lead to a significant loss of reactants, which still could be used in the solution polymerization process.

WO 2009/070261 A2 addresses problems of process efficiency and environmental emissions in the recovery of hydrocarbons from a mixed hydrocarbon/inert purge gas stream and the need to reduce the levels of non-condensable gases in the polymerization system without losing valuable monomers and/or comonomers contained in the reactor gas. For achieving this aim a recovery system is used, where recycle gas and recycle liquid are used to help in this operation. In removing the poisons a purge is actively set on the stripper column to push out as much as possible of the poisons from a liquid phase. The poisons are active species that can influence the catalyst performance and the variable costs of the process.

US2018/251582 A1 discloses a process for the continuous preparation of a polyolefin in a fluidized bed reactor with an expanded top section.

EP 2848635 A1 discloses a process for the introduction of a fresh feed selected from fresh comonomer and fresh inert hydrocarbon to a polymerisation reaction in a polymerisation reaction system comprising (i) a reactor having one or more withdrawal lines for withdrawal of a polymer-containing stream, and (ii) a recycle system for recycling reactants removed from the reactor in the withdrawn polymer-containing stream back to the reactor.

WO 2011/011427 A1 discloses a process for the polymerization of olefins. The recycled liquid stream (56) is fed at the distributor (46) to the reactor (30) but can also be fed at the top portion (34).The inlet streams (38), (40) and (42) may be liquid, gaseous or solid.

Therefore, feed stream preparation devices and processes thereof for solution polymerization optimized in view of control of volatile components with improved volatile reactants recycling are generally needed.

### Object of the invention

In view of the problem as set out above, it is one object of the present invention to provide a feeding device for preparing a feed stream for a solution polymerization, which allows the removal of volatile components such as hydrogen, inert gases and/or volatile impurities with preventing the loss of volatile reactants such as ethylene or propylene at the same time.

Furthermore, also in view of the problems as described above, it is a second object of the present invention to provide a process for preparing a feed stream for a solution polymerization, which allows the removal of volatile components such as hydrogen, inert gases and/or volatile impurities with preventing the loss of volatile reactants such as ethylene or propylene at the same time.

### Summary of the invention

It has now surprisingly been found out that above-mentioned problems are solved by a feeding device for preparing a feed stream for a solution polymerization, comprising a feed vessel, the feed vessel comprising a top zone and a bottom zone; a feed outlet for withdrawing the feed stream, wherein the feed outlet is positioned at the bottom zone; a waste outlet for withdrawing a waste vapour stream, wherein the waste outlet is positioned at the top zone; a first heat exchanger positioned below the top zone; an absorber positioned below the first heat exchanger; a first inlet for introducing a fresh liquid stream into or on top of the absorber, wherein the first inlet is positioned at the absorber; a second inlet for introducing a recycle liquid stream, wherein the second inlet is positioned below the first inlet; and a third inlet for introducing a recycle vapour stream, wherein the third inlet is positioned below the second inlet and above the feed outlet.

It has been further surprisingly found out that said problems are solved by a solution polymerization reactor assembly comprising said feeding device.

It has been further surprisingly found out that said problems are solved by a process for preparing a feed stream for a solution polymerization, the feed stream comprising at least one solvent, at least one reactant and optionally hydrogen, the process comprising the steps of providing at least one fresh liquid stream comprising the at least one solvent and optionally the at least one reactant, providing at least one recycle liquid stream comprising the at least one solvent and the at least one reactant, providing at least one recycle vapour stream comprising the at least one reactant, contacting the at least one recycle vapour stream with the at least one recycle liquid stream yielding a contacted recycle liquid stream and a contacted recycled vapour stream, contacting the contacted recycle vapour stream with the at least one fresh liquid stream yielding a contacted fresh liquid stream and a waste vapour stream, combining the contacted fresh liquid stream with the contacted recycle liquid stream yielding the feed stream, withdrawing the waste vapour stream, and withdrawing the feed stream.

### Definitions

The term *'volatile components'* as used herein denotes components preferably found in liquid and recycle vapour streams as provided by the recycling sections of solution polymerization processes. Such streams comprise components, which can evaporate from such liquid streams upon release of pressure or increase of temperature of said streams. Such volatile components can be inert gases such as nitrogen, unreacted light monomers such as ethylene and propylene, lower carbohydrates such as methane, ethane, propane or butane, generally volatile impurities provided by side reactions in the polymerization process as well as hydrogen.

The term *'fresh liquid'* as used herein denotes a liquid used in the feed stream having no amounts of volatile components at ambient conditions, i.e. 1 atm pressure and 20 °C.

The term *'recycle liquid'* as used herein denotes a liquid used in the feed stream having an amount of volatile components at ambient conditions, i.e. 1 atm pressure and 20 °C.

The term *'recycle vapour'* as used herein denotes a gaseous composition comprising an amount of volatile components.

The term *'reactants'* as used herein denotes monomers, such as ethylene or propylene, but further also includes optional comonomer(s).

The term *'absorber* as used herein denotes a device, which is suitable to intensify contact between liquid and vapour phases. Preferably, the absorber is a packed bed column and/or a tray column. However, the tray column requires more space than a packed column. Therefore, more preferably, the absorber is a packed bed column. Most preferably, the absorber comprises one or more unit(s), wherein a unit consists of a liquid distributor on top followed by a section of a packing, preferably a random metal packing, such as Intalox metal packing or Raschig rings, and a gas distributor at the bottom.

It should be further understood that the terms *'below'* and *'above'* as used herein for the description of the constitution of the feeding device are used with reference to the gravitational force and therefore the height of the feeding device.

The term *'spraying'* as used herein has to be understood as a process step, in which a condensed phase is introduced into a gaseous phase. Thereby the condensed phase is split up in multiple droplets. This is usually done by at least one nozzle. Spraying has to be understood as a process step in which a two phase system is formed (gaseous/condensed) having a phase separating surface as high as possible.

The term *'distributor'* as used herein denotes a device, which is able to distribute, i.e. finely disperse, liquid and/or gas in case the liquid and/or gas passes the distributor. Preferably, the distributor is a distribution plate, distributing liquids downwards and vapours upwards.

### Short description of the drawings

Figure 1 shows a schematic drawing of the most general embodiment of the feeding device according to the present invention. It should be understood that the schematic drawing does not reflect the actual dimensions of the feeding device. The same holds for the remaining Figures.
Figure 2 shows a schematic drawing of a feeding device according to the present invention showing preferred embodiments in view of the introduction of the recycle liquid stream into the feed vessel. Thereby an embodiment (2a) involving an inlet suitable for spraying, another embodiment (2b) involving gas and liquid distributors and a third embodiment (2c), in which the second inlet is positioned at the absorber, are shown.
Figure 3 shows a schematic drawing of an embodiment of a feeding device according to the present invention according to Figure 2, wherein embodiments 2a and 2b are combined.
Figure 4 shows a schematic drawing of the feeding device according to the present invention showing preferred embodiments in view of the introduction of the recycle vapour stream into the feed vessel. Thereby an embodiment (4a) involving a dosing pipe and another embodiment (4b) involving a gas distributor are shown.
Figure 5 shows a schematic drawing of a most preferred embodiment of a feeding device according to the present invention combining the features of the embodiments shown in Figures 3 and 4a.
Figure 6 shows a schematic drawing of a polymerization reactor including the feeding device of the current invention for indication on the position of the feed vessel in the total reactorfeed system.

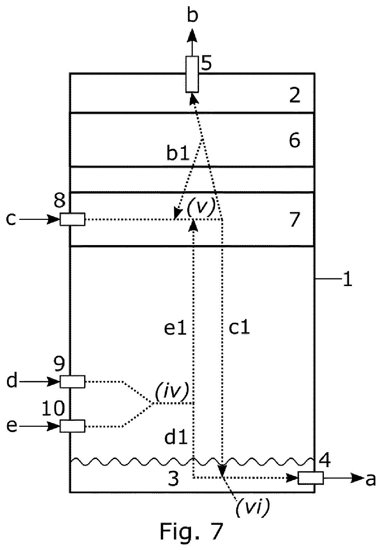

Figure 7 shows a schematic drawing of the most general embodiment of the process of the invention using the feeding device according to Figure 1. The reference signs given in italic characters and encapsulated in round brackets refer to the steps as provided for the process.

### Reference signs

1 feeding vessel
2 top zone
3 bottom zone
4 feed outlet
5 waste outlet
6 first heat exchanger
7 absorber
8 first inlet
9 second inlet
10 third inlet
11 first distributor
12 second distributor
13 dosing pipe
14 third distributor
15 pump
16 polymerization reactor
17 fourth inlet
18 second heat exchanger
19 fifth inlet
20 sixth inlet
a feed strean
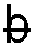 waste vapour stream
c fresh liquid stream
c1 contacted fresh liquid stream
d recycle liquid stream
d1 contacted recycle liquid stream
e recycle vapour stream
e1 contacted recycle vapour stream
f comonomer stream
g monomer stream
h hydrogen stream

### Detailed description of the invention

### Feeding device

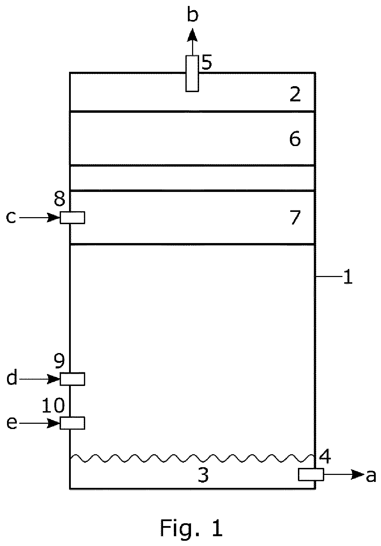

The present invention provides a feeding device for preparing a feed stream (a) for solution polymerization (cf. Figure 1), comprising a feed vessel (1), the feed vessel (1) comprising:
- a top zone (2) and a bottom zone (3);
- a feed stream outlet (4) configured to withdraw the feed stream (a), wherein the feed stream outlet (4) is positioned at the bottom zone (3);
- a waste vapour stream outlet (5) configured to withdraw a waste vapour stream (b), wherein the waste vapour stream outlet (5) is positioned at the top zone (2);
- a first heat exchanger (6) positioned below the top zone (2);
- an absorber (7) positioned below the first heat exchanger (6);
- a fresh liquid stream inlet as a first inlet (8) configured to introduce a fresh liquid stream (c) into or on top of the absorber (7), wherein the first inlet (8) is positioned at the absorber (7);
- a recycle liquid stream inlet as a second inlet (9) configured to introduce a recycle liquid stream (d), wherein the second inlet (9) is positioned below the first inlet (8); and
- a recycle vapour stream inlet as a third inlet (10) configured to introduce a recycle vapour stream (e), wherein the third inlet (10) is positioned below the second inlet (10) and above the feed outlet (4).

Preferably, the first heat exchanger (6) of the feeding device of the present invention is positioned so that at least parts of the vapour waste stream (b) passing the first heat exchanger (6) are condensed and returned to the absorber (7). Therefore, preferably, the heat exchanger (7) is positioned downstream of the first inlet (8), downstream of the absorber (7) and upstream of the waste outlet (4) with reference to the flow direction of the vapour in the feed vessel (1). In such a configuration, the first heat exchanger (6) can be adjusted to selectively condense and return only volatile components, which should be reintroduced into the feed stream (a), such as unreacted reactants. It should be understood that, while it is preferable that the heat exchanger is part of the feed vessel (1), such a setup is not necessarily needed. Hence, in an alternative embodiment, the first heat exchanger (6) could be positioned outside of the feed vessel (1) and be respectively connected to the vessel to receive the waste vapour stream (b) and to return the condensed waste vapour stream into the feed vessel (1).

Optionally and preferably, the feeding device of the present invention further comprises a second heat exchanger (not shown in the Figures). This second heat exchanger is positioned at the fresh liquid stream (c) upstream to the first inlet (8) with respect to the flow direction of the fresh liquid stream (c). This heat exchanger can be used to cool down the fresh liquid stream (c) before entering the absorber (7) to support that less volatile reactants are taken with the waste vapour stream (b) and vented off.

Preferably, the absorber (3) is a packed-bed absorber.

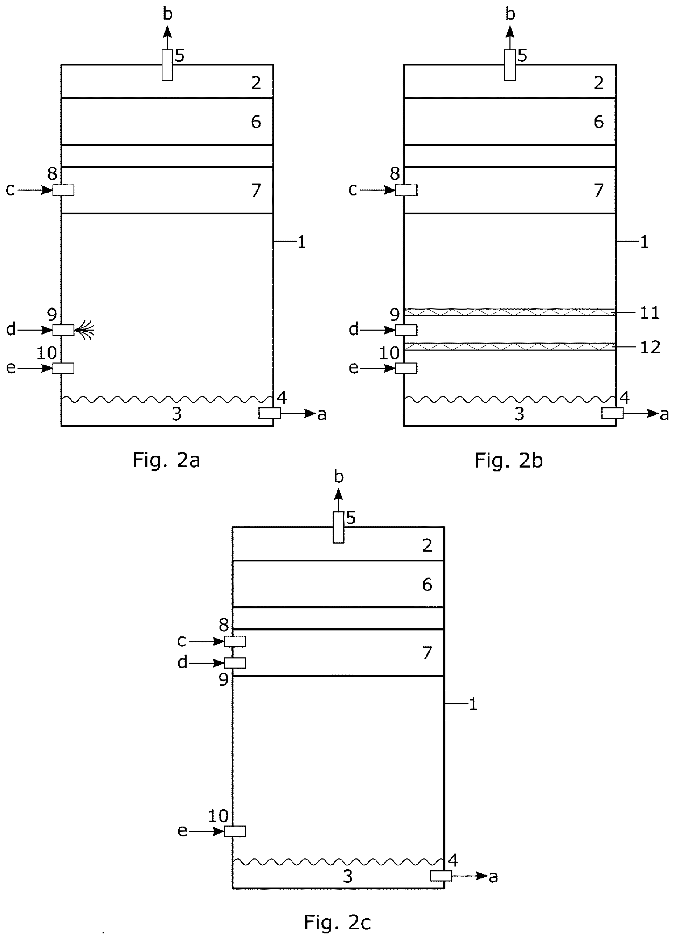

Furthermore, in a preferred embodiment of the invention according to Fig. 2a, the second inlet (9) further comprises a sprayer device configured to spray the recycle liquid stream (d) into the feed vessel (1). The effect of the spraying by the spraying device is that a gaseous/liquid phase system with a very high phase separating surface is formed in a short period of time, whereby the liquid part of the system is the recycle liquid stream (d). As a subsequent effect of the formation of said system, volatile components comprised in the liquid recycle stream are set free and travel towards the top zone (2) of the feed vessel (1). Furthermore, as another subsequent effect, the condensed part of the recycle liquid stream is finely dispersed and travels down towards the bottom zone (3) of the feed vessel (1). The fine dispersion makes the liquid more absorptive in view of volatile components comprised in the recycle vapour stream (e) travelling counter currently up from the third inlet (10) to the top zone (2) of the feed vessel (1).

Also in a preferred embodiment of the invention according to Fig. 2b, the feed vessel (1) comprises a second distributor (12) positioned below the second inlet (9) and above the third inlet (10). This equally ensures that a liquid shower of the liquid comprised in the recycle liquid stream (d) is created, leading to the liquid of the recycle liquid stream (b) falling down in the feed vessel (1) in a highly distributed manner. As a result, at least parts of the volatile components in the liquid recycle stream are set free, traveling along the stream direction towards the top zone (2) of the feed vessel (1). These volatile components can comprise hydrogen, inert gases, volatile impurities and also volatile reactants. Furthermore, the feeding device is configured to ensure that the volatile components released from the recycle liquid stream travel through the absorber (3). In said preferred embodiment according to Figure 2b, the feed vessel (1) can also comprise a first distributor (11) positioned above the second inlet (9) and below the absorber (7). Such a setup ensures that the gases evaporating from said liquid shower as well as the gases of the recycle vapour stream traveling upwards the top zone (2) are disturbed to create maximum contact with the downwards traveling liquids of the fresh liquid stream (c). This further has the advantage that the conditions can be adjusted so that only specific components such as reactants are absorbed, i.e. solved, in the fresh solvent of the fresh liquid stream (c) and/or the liquid of the recycle liquid stream (d). Generally, the pressure and temperature are chosen to allow the removal of volatile compounds. However, the position of the feeding locations for the fresh and recycled streams maximize the absorption of relatively heavy components.

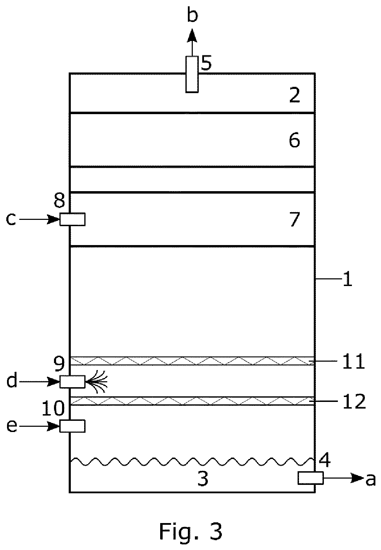

Even more preferably, the features of these two preferred embodiments can be combined, i.e. the spraying device of the second inlet (9) with the first distributor (11) and the second distributor (12) as depicted in Figure 3. Most preferably, a metal packing can be added between the first and the second distributor. The combination of the two distributors and the metal packing is an absorber.

It is an essential feature of the present invention that the fresh liquid stream (c) is introduced directly into or on top of the absorber (7). Thus, the fresh liquid of the fresh liquid stream (c) and the volatile components evaporating from the recycle liquid stream (d) as well as from the recycle vapour stream (e) are contacted in the absorber (7). This has the advantage that the contacting is maximized in the absorber (7) and the conditions in the absorber (7) can be adjusted so that only specific components such as reactants are absorbed, i.e. solved, in the fresh liquid of the fresh liquid stream (c). By maximizing the contacting between the volatile components and the fresh liquid such an adjustment can be found more easily.

Therefore, in the preferred embodiments 2a and 2b, the position of the second inlet (9) is below the absorber (7) and above the third inlet (10). However, in another preferred alternative embodiment of the present invention according to Figure 2c, the second inlet (9) is positioned at the absorber (7) and even more preferably below the first inlet (8). Hence, in such a preferred embodiment, contacting with the fresh liquid of the fresh liquid stream (c) occurs completely within the absorber. Respectively, the gaseous stream and the liquid stream leaving the absorber at the top and the bottom, respectively, are again finely distributed by the gas distributor and the liquid distributor as comprised in the absorber (7).

It should be understood that preferably the recycle liquid stream is withdrawn from a recycling section of a polymerization process, more preferably from the recycle section of the polymerization process the feed stream is fed to. Such a recycle section of a solution polymerization process typically consists of one or more flash separators separating the mixture withdrawn from the reactor in one or more polymer-rich liquid stream(s) and one or more polymer-lean vapour stream(s) commonly comprising unreacted reactants, solvent, inert gases and volatile impurities. The vapour streams are preferably again separated into at least one liquid stream and at least one vapour stream. Hence, the recycle section provides at least one recycle liquid stream, which is introduced into the feeding device of the present invention as disclosed above, and a recycle vapour stream. However, this stream still may contain unreacted reactants, which could be recycled into the polymerization process.

Therefore, the feeding device of the present invention further comprises a third inlet (10) for introducing the recycle vapour stream (e) positioned below the second inlet (9) and above the feed outlet (4). In such a way, the volatile components of the recycle vapour stream (e) travel upwards to the top zone (2) thereby passing and contacting the liquid components of the fresh liquid stream (c) and the recycle liquid stream (d). This allows selective solving of reactants from the recycle vapour stream (e) and reintroduction into the feed stream (a).

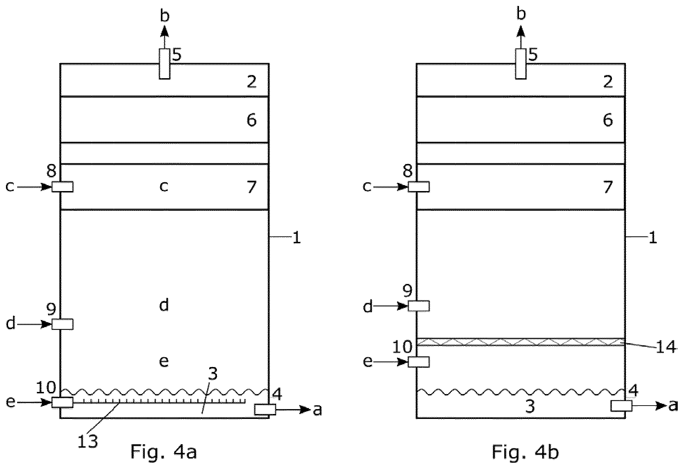

In a preferred embodiment according to Figure 4a, the third inlet (10) is positioned at the bottom zone (3) and comprises a dosing pipe (13) extending into the bottom zone (3) of the feed vessel (1). Most preferably, such a dosing pipe can be a distribution pipe, preferably having a length of the diameter of the feeding vessel (1), with holes therein. It should be understood that the bottom zone (3) is configured to hold the liquid phase of the feed stream (a). This is indicated in the Figures by the waved line. Hence, in the preferred embodiment of Figure 4a, the dosing pipe is configured to extend within the liquid phase of the feed stream (a). Therefore, the recycle vapour stream (e) passing the dosing pipe is not only finely dispersed and disturbed, but also is forced to travel through the liquid in the bottom zone. This has the effect that volatile components, which are most easily solvable in the liquid, such as reactants, are dissolved in the feed stream liquid in the first place due to the significantly enhanced liquid/gas surface area. Furthermore, this embodiment has the advantage that the recycle vapour stream (e) is disturbed and, hence, the contacting with the recycle liquid stream (d) is also improved. The advantage of contacting the recycle vapour stream (e) with the recycle liquid stream (d) is that reactants in the recycle vapour stream (e) might already be solved in the recycle liquid stream (d). As the vapour of the recycle vapours stream (e) follows the same passageway as the volatile components evaporating from the recycle liquid stream (d), they also are lead into or on top of the absorber (7). Therefore, the general advantages of leading the recycle vapour stream (e) into the feeding vessel (1) is analogously to the advantage of leading the evaporated volatile components of the recycle liquid stream (d) through the absorber (7) provided with a fresh liquid stream (c): as the contacting between the recycle vapour stream (e) and the fresh liquid stream (c) is maximized within the absorber (7), the conditions in the absorber (7) can be adjusted so that only specific components such as reactants are absorbed, i.e. solved, in the fresh solvent of the fresh solvent stream (c). Furthermore, another general advantage is that such a setup enables both the recycling of reactants from the recycle liquid stream (d), but also from the recycle vapour stream (e).

In another preferred embodiment of the feeding device of the present invention according to Figure 4b the feed vessel (1) comprises a third distributor (14) positioned above the third inlet (10) and below the second inlet (9). This measure ensures that the recycle vapour stream (e) is disturbed and the contacting of the recycle vapour stream (e) and the liquids from the fresh liquid stream (c) and the recycle liquid stream (d) improved.

Preferably, the feeding device of the present invention furthermore comprises a feed stream storage vessel configured to store the feed stream (a) positioned downstream of the feed outlet (4). The storage vessel has the advantage that it can be ensured that the feed stream (a) is not running empty and the polymerization reactor is constantly and reliably supplemented with feed stream.

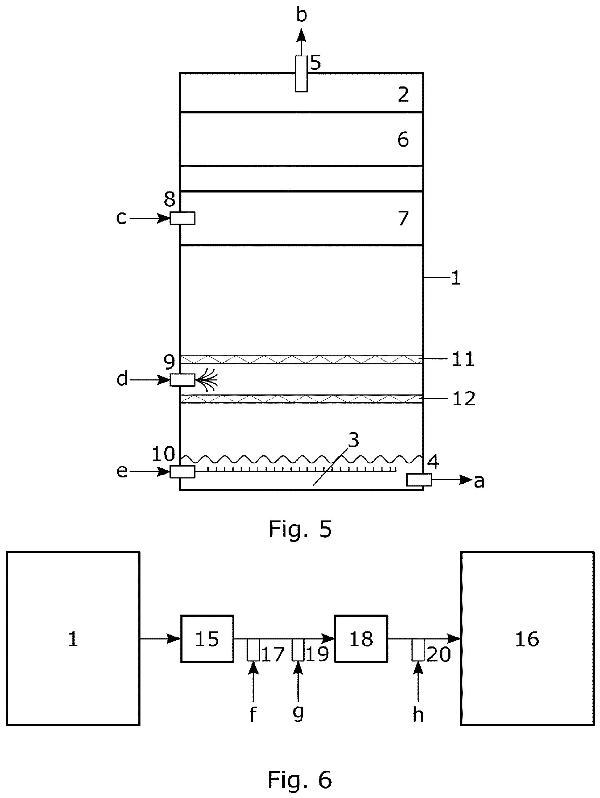

Preferably, the feeding device of the present invention comprises further means for preparing the feed stream (a). Generally, apart from the recycling aspect, the feed stream (a) might have to be enriched in certain reactants and also hydrogen, where necessary. Furthermore, the conditions of the stream might have to be adjusted before entering the polymerization reactor. Therefore, as depicted in Figure 6, the feeding device of the present invention preferably further comprises a pump (15) positioned downstream of the feed outlet (4) of the feed vessel (1) with reference to the flow direction of the feed stream (a). Such a pump ensures that the pressure of the feed stream can be adjusted to the pressure the polymerization reactor (16; not part of the feeding device) is operated at.

Furthermore, the feeding device of the present invention preferably further comprises at least one fourth inlet (17) for introducing at least one comonomer stream (f) into the feed stream (a), whereas the at least one fourth inlet (17) is positioned downstream of the feed outlet (4) with reference to the flow direction of the feed stream (c), preferably downstream of the pump (15). It has been found out that the comonomer can also be dosed as part of the fresh liquid stream (c). This is especially preferable if the comonomer has a boiling point equal or higher as the solvent in use.

Preferably, the feeding device of the present invention further comprises at least one third heat exchanger (18) positioned downstream of the feed outlet (4) with reference to the flow direction of the feed stream (a). Preferably, the pump (15) is positioned upstream of the at least one third heat exchanger (18) with reference to the flow direction of the feed stream (a).

Also preferably, the feeding device of the present invention further comprises at least one fifth inlet (19) for introducing the monomer, preferably ethylene or propylene, into the feed stream (a) positioned downstream of the feed outlet (4) with reference to the flow direction of the feed stream (a). Preferably, the fifth inlet (19) is positioned upstream of the pump (15) and downstream of the at least one third heat exchanger (18) with reference to the flow direction of the feed stream (a).

Further preferably, the feeding device of the present invention further comprises at least one sixth inlet (20) for introducing hydrogen into the feed stream (a), the sixth inlet (20) being preferably positioned downstream of the at least third heat exchanger (18) with reference to the flow direction of the feed stream (a).

### General process of the invention

Generally, the feeding process of the present invention is connected to a solution polymerization process. First of all, the feeding process provides the feed stream for a solution polymerization process. Second, preferably, the feeding process is used to recycle streams (liquid and also vapour streams) withdrawn from a solution polymerization process. Even more preferably, these two solution polymerization processes (i.e. the one the feed stream is fed to and the one the recycle streams are taken from) are one identical solution polymerization process. Therefore, the solution polymerization process should be described in the following.

### Solution polymerization process

Preferably, the present invention is applicable for supercritical, solution and advanced solution polymerization processes. More preferably are continuous supercritical, solution and advanced solution polymerization processes. Most preferably, the production process comprises a continuous solution polymerization process.

The polymer produced in the present invention can be any polymer, for the production of which volatile compounds are used. Preferably, the polymer produced in the present invention is an olefin homo- or copolymer. More preferably, the monomer of this polymer is selected from an α-olefin having a carbon atom number of 2 to 4, preferably ethylene, propylene, 1-butene, most preferably from ethylene. Most preferably, the polymer is a polyethylene copolymer or homopolymer.

In case the polymer is a copolymer, the comonomer preferably is different from the α-olefin monomer and is selected from the group consisting of linear and cyclic olefins and α-olefins having from 2 to 12 carbon atoms and mixtures thereof. More preferably, the comonomer is an α-olefin different from the olefin monomer and is selected from the group consisting of linear olefins having from 2 to 12 carbon atoms and mixtures thereof, preferably 4 to 10 carbon atoms, most preferably 1-butene and 1-octene.

In a most preferred embodiment, the polymer is produced in a solution polymerization process as disclosed in the following.

The polymerization is typically conducted in the presence of an olefin polymerization catalyst. The olefin polymerization catalyst may be any catalyst known in the art, which is capable of polymerizing the monomer and the optional comonomer. Thus, the polymerization catalyst may be a Ziegler-Natta catalyst as disclosed in EP-A-280352, EP-A-280353 and EP-A-286148, or it may be a metallocene catalyst as disclosed in WO-A-1993025590, US-A-5001205, WO-A-1987003604 and US-A-5001244, or it may be a combination of these. Other suitable catalysts, such as late transition metal catalysts, can also be used.

In a solution polymerization process a solvent is also present. The solvent is in liquid or supercritical state in the polymerization conditions. The solvent is typically and preferably a hydrocarbon solvent. The liquid hydrocarbon solvent used is preferably a C₅₋₁₂-hydrocarbon, which may be unsubstituted or substituted by C₁₋₄ alkyl group such as pentane, methyl pentane, hexane, heptane, octane, cyclohexane, methylcyclohexane and hydrogenated naphtha. More preferably, unsubstituted C₆₋₁₀-hydrocarbon solvents are used, most preferably unsubstituted C₅-₇-hydrocarbon solvents.

Other components may also be added into the reactor. It is known to feed hydrogen into the reactor for controlling the molecular weight of the polymer formed during the polymerization. The use of different antifouling compounds is also known in the art. In addition, different kinds of activity boosters or activity retarders may be used for controlling the activity of the catalyst.

Typically, the content of the polymer in the stream withdrawn from the polymerization reactor comprising the solvent, the polymer and the unreacted monomer and optionally comonomer is from 10 to 35 wt%, preferably from 12.5 to 30 wt%, more preferably from 15 to 25 wt%.

Also typically, the stream withdrawn from the reactor is further recycled, i.e. fed to the separation section downstream, to an amount of more than 20% of the total stream withdrawn from the reactor, preferably more than 40% and most preferably more than 60%.

Said stream is fed to a separation section. In such a section the polymer comprising stream is usually split into a polymer-rich condensed phase and a polymer-lean vapour phase with the help of one or more flash separators. The vapour phase comprising volatile reactants, inert gases, hydrogen and volatile impurities is subsequently separated into a recycle liquid stream and a recycle vapour stream. This recycle liquid stream and also the recycle vapour stream are fed the feeding process according to the present invention an as described in the following.

### Feeding process

The present invention further provides a process for preparing a feed stream (a) for a solution polymerization in a feed vessel (1), the feed stream (a) comprising at least one solvent, at least one reactant and optionally hydrogen, inert gases and/or impurities, the process comprising the steps of:
(i) Providing at least one fresh liquid stream (c) comprising at least one solvent and optionally at least one reactant;
(ii) Providing at least one recycle liquid stream (d) comprising at least one solvent and at least one reactant;
(iii) Providing at least one recycle vapour stream (e) comprising the at least one reactant;
(iv) Contacting the at least one recycle vapour stream (e) with the at least one recycle liquid stream (d) yielding a contacted recycle liquid stream (d1) and a contacted recycle vapour stream (e1);
(v) Contacting the contacted recycle vapour stream (e1) with the at least one fresh liquid stream yielding a contacted fresh liquid stream (c1) and a waste vapour stream (b);
(vi) Combining the contacted fresh liquid stream (c1) with the contacted recycle liquid stream (d1) yielding the feed stream (a);
(vii) Withdrawing the waste vapour stream (b) by a waste outlet (5) positioned at a top zone (2) of the feed vessel (1);
(viii) Withdrawing the feed stream (a) by a feed outlet (4) positioned at a bottom zone (3) of the feed vessel (1), wherein

in step (i) the at least one fresh liquid stream (c) is provided by a first inlet (8) into or on top of an absorber (7), wherein the first inlet (8) is positioned at the absorber (7),
in step (ii) the at least one recycle liquid stream (d) is provided by a second inlet (9), wherein the second inlet (9) is positioned below the first inlet (8),
in step (iii) the at least one recycle vapour stream (e) is provided by a third inlet (10), wherein the third inlet (10) is positioned below the second inlet (9) and above the feed outlet (4).

As described for the feeding device beforehand, the step of releasing the volatile components from the recycle liquid stream (d) as provided by the separation section of the preceding polymerization process and the contacting with the fresh liquid stream (c) with such evaporated components has the surprising effect that unwanted volatile components of the recycle liquid stream (d) such as inert gases, hydrogen or volatile impurities, can be removed from said stream and vented off, while wanted volatile components of the recycle liquid stream (d) such as reactants can be combined again in the feed stream (a) enabling recovering such wanted components into the polymerization process without having the disadvantages of not being able to control the amount of inert gases, hydrogen and/or volatile impurities in the process.

To ensure best evaporation of volatile components from the recycle liquid stream, the process of the present invention preferably further comprises the step of distributing the recycle liquid stream (a). As explained for the feeding device, this can be preferably achieved using a distributor (12) or a sprayer device.

The process of the present invention further comprises the steps of providing a recycle vapour stream (e). This recycle vapour stream (e) flows counter currently to the fresh liquid stream (c) and the recycle liquid stream (d). This contacting of the recycle vapour stream with the fresh liquid stream (c) and the recycle liquid stream (d) has the surprising effect that unwanted volatile components of the recycle vapour stream (e) such as inert gases, hydrogen or volatile impurities, can additionally be removed from said stream and vented off, while wanted volatile components of the recycle vapour stream (e) such as reactants can be combined again in the feed stream (a) enabling recovering such wanted components into the polymerization process without having the disadvantages of not being able to control the amount of inert gases, hydrogen and/or volatile impurities in the process.

Even more preferably, the recycle vapour stream (e) is further distributed before contacting with the fresh liquid stream (c) and/or the recycle liquid stream (d) preferably using a dosing pipe or a gas distributor. Most preferably, the recycle vapour stream (e) is brought into contact with liquid in the bottom zone. This is preferably achieved by a dosing pipe (13) extending into the liquid in the bottom zone of the feeding device as explained earlier. As also already explained in the section regarding the feeding device, such a distribution has the advantage that also more wanted volatile components from a recycle vapour stream (e) such as unreacted reactants can be brought in contact with the fresh liquid stream (c) allowing for selective absorbing, i.e. solving, of wanted volatile components such as unreacted reactants and recycling thereof into the feed stream (a).

In another preferred embodiment of the present invention, the process further comprises the step of intermediately storing the feed stream (a) in a storage vessel. Such a configuration ensures that the feed stream is buffered and the polymerization reactor is constantly and reliably supplemented with feed stream.

Furthermore, the process according to the present invention preferably further comprises the step of at least partially condensing the vapour waste stream (b) using a first heat exchanger (6) yielding a condensed vapour stream and reintroducing the condensed vapour stream in the top zone. This configuration further enhances the ability of the process to selectively remove unwanted volatile components from the recycle streams and selectively recycle unreacted reactants to the polymerization reactor.

Preferably, the process according to the present invention further comprises the step of at least partially cooling the fresh liquid stream using a second heat exchanger before the inlet (8). The cooling can affect the temperature in the feeding process and the feeding device. It therefore influences the driving forces of absorption for the several components.

In the process of the present invention, the feed stream (a) is preferably further processed before being fed to the polymerization reactor. Hence, preferably the feed stream is compressed to a pressure in the range of 50 to 300 barg before entering the polymerization reactor. Furthermore, also preferably, the feed stream is cooled down to a temperature in the range of -50 to +50 °C before entering the polymerization reactor.

Finally, in preferred embodiments, the feed stream can be further modified by introducing at least one monomer into the feed stream (a), introducing at least one comonomer into the feed stream (a) and/or introducing hydrogen into the feed stream (a).

Preferably, the process is carried out in the range of 3 to 8 barg pressure.

## Claims

1. A feeding device for preparing a feed stream (a) for a solution polymerization, comprising a feed vessel (1), the feed vessel (1) comprising:
- a top zone (2) and a bottom zone (3);
- a feed stream outlet as a feed outlet (4) configured to withdraw the feed stream (a), wherein the feed stream outlet (4) is positioned at the bottom zone (3);
- a waste vapour stream outlet as a waste outlet (5) configured to withdraw a waste vapour stream (b), wherein the waste outlet (5) is positioned at the top zone (2);
- a first heat exchanger (6) positioned below the top zone (2);
- an absorber (7) positioned below the first heat exchanger (6);
- a fresh liquid stream inlet as a first inlet (8) configured to introduce a fresh liquid stream (c) into or on top of the absorber (7), wherein the first inlet (8) is positioned at the absorber (7);
- a recycle liquid stream inlet as a second inlet (9) configured to introduce a recycle liquid stream (d), wherein the second inlet (9) is positioned below the first inlet (8); and
- a recycle vapour stream inlet as a third inlet (10) configured to introduce a recycle vapour stream (e), wherein the third inlet (10) is positioned below the second inlet (9) and above the feed outlet (4).

2. The feeding device according to one of the preceding claims, further comprising:
- a feed stream storage vessel configured to store the feed stream (a) positioned downstream of the feed outlet (4).

3. The feeding device according to one of the preceding claims, wherein the second inlet (9) further comprises a sprayer device configured to spray the at least one recycle liquid stream (d) into the feed vessel (1).

4. The feeding device according to one of the preceding claims, wherein the feed vessel (1) further comprises a first distributor (11) positioned above the second inlet (9) and a second distributor (12) positioned below the second inlet (9).

5. The feeding device according to one of the preceding claims 1 or 2, wherein the second inlet (9) is positioned at the absorber (7).

6. The feeding device according to one of the preceding claims, wherein the third inlet (10) is located in the bottom zone (3) and wherein the third inlet (10) further comprises a dosing pipe (13) extending into the bottom zone (3).

7. The feeding device according to one of the preceding claims, wherein the feed vessel (1) further comprises a third distributor (14) located above the third inlet (10).

8. A solution polymerization reactor assembly comprising a feeding device according to any of the preceding claims.

9. A process for preparing a feed stream (a) for a solution polymerization in a feed vessel (1), the feed stream (a) comprising at least one solvent, at least one reactant and optionally hydrogen, the process comprising the steps of:
(i) providing at least one fresh liquid stream (c) comprising the at least one solvent and optionally the at least one reactant;
(ii) providing at least one recycle liquid stream (d) comprising the at least one solvent and the at least one reactant;
(iii) providing at least one recycle vapour stream (e) comprising the at least one reactant;
(iv) contacting the at least one recycle vapour stream (e) with the at least one recycle liquid stream (d) yielding a contacted recycle liquid stream (d1) and a contacted recycle vapour stream (e1);
(v) contacting the contacted recycle vapour stream (e1) with the at least one fresh liquid stream (c) yielding a contacted fresh liquid stream (c1) and a waste vapour stream (b);
(vi) combining the contacted fresh liquid stream (c1) with the contacted recycle liquid stream (d1) yielding the feed stream (a);
(vii) withdrawing the waste vapour stream (b) by a waste outlet (5) positioned at a top zone (2) of the feed vessel (1);
(viii) withdrawing the feed stream (a) by a feed outlet (4) positioned at a bottom zone (3) of the feed vessel (1), wherein
in step (i) the at least one fresh liquid stream (c) is provided by a first inlet (8) into or on top of an absorber (7), wherein the first inlet (8) is positioned at the absorber (7),
in step (ii) the at least one recycle liquid stream (d) is provided by a second inlet (9), wherein the second inlet (9) is positioned below the first inlet (8),
in step (iii) the at least one recycle vapour stream (e) is provided by a third inlet (10), wherein the third inlet (10) is positioned below the second inlet (9) and above the feed outlet (4).

10. The process according to claim 9, wherein step (vi) is carried out within step (v) so that the contacted fresh liquid stream (c1) is also contacted with the recycle vapour stream (e).

11. The process according to one of claims 9 or 10, further comprising the step of:
(ix) distributing the recycle liquid stream (d) before step (iv).

12. The process according to one of claims 9 to 11, further comprising the step of:
(x) distributing the recycle vapour stream (e) before step (iv).

13. The process according to any of the preceding claims 9 to 12, further comprising the step of
(xi) intermediately storing the feed stream (a) in a storage vessel after step (vii).

14. The process according to any of the preceding claims 9 to 13, further comprising the step of
(xii) at least partially condensing the waste vapour stream (b) using a first heat exchanger (6) yielding a condensed waste vapour stream (b1) and reintroducing the condensed waste vapour stream (b1) in step (v).

15. The process according to any of the preceding claims 9 to 14, further comprising the step of
(xiii) at least partially cooling the fresh liquid stream (c) using a second heat exchanger before step (i).

## Patentansprüche

1. Zuführvorrichtung für das Vorbereiten eines Zufuhrstroms (a) für eine Lösungspolymerisation, die ein Zufuhrgefäß (1) umfasst, wobei das Zufuhrgefäß (1) umfasst:
- eine obere Zone (2) und eine untere Zone (3),
- einen Zufuhrstromauslass als einen Zufuhrauslass (4), der konfiguriert ist zum Ausführen des Zufuhrstroms (a), wobei der Zufuhrstromauslass (4) an der unteren Zone (3) angeordnet ist,
- einen Abdampfstromauslass als einen Ablassauslass (5), der konfiguriert ist zum Ausführen eines Abdampfstroms (b), wobei der Ablassauslass (5) an der oberen Zone (2) angeordnet ist,
- einen ersten Wärmetauscher (6), der unter der oberen Zone (2) angeordnet ist,
- einen Absorbierer (7), der unter dem ersten Wärmetauscher (6) angeordnet ist,
- einen Frischflüssigkeitsstromeinlass als einen ersten Einlass (8), der konfiguriert ist zum Einführen eines Frischflüssigkeitsstroms (c) in oder über dem Absorbierer (7), wobei der erste Einlass (8) an dem Absorbierer (7) angeordnet ist,
- einen Rückführflüssigkeitsstromeinlass als einen zweiten Einlass (9), der konfiguriert ist zum Einführen eines Rückführflüssigkeitsstroms (d), wobei der zweite Einlass (9) unter dem ersten Einlass (8) angeordnet ist, und
- einen Rückführdampfstromeinlass als einen dritten Einlass (10), der konfiguriert ist zum Einführen eines Rückführdampfstroms (e), wobei der dritte Einlass (10) unter dem zweiten Einlass (9) und über dem Zufuhrauslass (4) angeordnet ist.

2. Zuführvorrichtung nach Anspruch 1, die weiterhin umfasst:
- ein Zufuhrstrom-Speichergefäß, das konfiguriert ist zum Speichern des Zufuhrstroms (a) und stromabwärts von dem Zufuhrauslass (4) angeordnet ist.

3. Zuführvorrichtung nach einem der vorstehenden Ansprüche, wobei der zweite Einlass (9) weiterhin eine Sprüheinrichtung umfasst, die konfiguriert ist zum Sprühen des wenigstens einen Rückführflüssigkeitsstroms (d) in das Zuführgefäß (1).

4. Zuführvorrichtung nach einem der vorstehenden Ansprüche, wobei das Zuführgefäß (1) weiterhin einen ersten Verteiler (11), der über dem zweiten Einlass (9) angeordnet ist, und einen zweiten Verteiler (12), der unter dem zweiten Einlass (9) angeordnet ist, umfasst.

5. Zuführvorrichtung nach Anspruch 1 oder 2, wobei der zweite Einlass (9) an dem Absorbierer (7) angeordnet ist.

6. Zuführvorrichtung nach einem der vorstehenden Ansprüche, wobei der dritte Einlass (10) in der unteren Zone (3) angeordnet ist und wobei der dritte Einlass (10) weiterhin ein sich in die untere Zone (3) erstreckendes Dosierungsrohr (13) umfasst.

7. Zuführvorrichtung nach einem der vorstehenden Ansprüche, wobei das Zufuhrgefäß (1) weiterhin einen dritten Verteiler (14), der über dem dritten Einlass (10) angeordnet ist, umfasst.

8. Lösungspolymerisationsreaktoranordnung, die eine Zuführvorrichtung gemäß einem der vorstehenden Ansprüche umfasst.

9. Verfahren zum Vorbereiten eines Zufuhrstroms (a) für eine Lösungspolymerisation in einem Zufuhrgefäß (1), wobei der Zufuhrstrom (a) wenigstens ein Lösungsmittel, wenigstens ein Reaktionsmittel und optional Wasserstoff umfasst, wobei das Verfahren die folgenden Schritte umfasst:
(i) Vorsehen wenigstens eines Frischflüssigkeitsstroms (c), der das wenigstens eine Lösungsmittel und optional das wenigstens eine Reaktionsmittel umfasst,
(ii) Vorsehen wenigstens eines Rückführflüssigkeitsstroms (d), der das wenigstens eine Lösungsmittel und das wenigstens eine Reaktionsmittel umfasst,
(iii) Vorsehen wenigstens eines Rückführdampfstroms (e), der das wenigstens eine Reaktionsmittel umfasst,
(iv) Kontaktieren des wenigstens einen Rückführdampfstroms (e) mit dem wenigstens einen Rückführflüssigkeitsstrom (d), was einen kontaktierten Rückführflüssigkeitsstrom (d1) und einen kontaktierten Rückführdampfstrom (e1) ergibt,
(v) Kontaktieren des kontaktierten Rückführdampfstroms (e1) mit dem wenigstens einen Frischflüssigkeitsstrom (c), was einen kontaktierten Frischflüssigkeitsstrom (c1) und einen Abdampfstrom (b) ergibt,
(vi) Kombinieren des kontaktierten Frischflüssigkeitsstroms (c1) mit dem kontaktierten Rückführflüssigkeitsstrom (d1), was den Zufuhrstrom (a) ergibt,
(vii) Ausführen des Abdampfstroms (b) über einen Ablassauslass (5), der an einer oberen Zone (2) des Zufuhrgefäßes (1) angeordnet ist,
(viii) Ausführen des Zufuhrstroms (a) über einen Zufuhrauslass (4), der an einer unteren Zone (3) des Zufuhrgefäßes (1) angeordnet ist, wobei:
in dem Schritt (i) der wenigstens eine Frischflüssigkeitsstrom (c) über einen ersten Einlass (8) in oder über einem Absorbierer (7) vorgesehen wird, wobei der erste Einlass (8) an dem Absorbierer (7) angeordnet ist,
in dem Schritt (ii) der wenigstens eine Rückführflüssigkeitsstrom (d) über einen zweiten Einlass (9) vorgesehen wird, wobei der zweite Einlass (9) unter dem ersten Einlass (8) angeordnet ist,
in dem Schritt (iii) der wenigstens eine Rückführdampfstrom (e) über einen dritten Einlass (10) vorgesehen wird, wobei der dritte Einlass (10) unter dem zweiten Einlass (9) und über dem Zufuhrauslass (4) angeordnet ist.

10. Verfahren nach Anspruch 9, wobei der Schritt (vi) in dem Schritt (v) ausgeführt wird, sodass der kontaktierte Frischflüssigkeitsstrom (c1) auch mit dem Rückführdampfstrom (e) kontaktiert wird.

11. Verfahren nach Anspruch 9 oder 10, das weiterhin den folgenden Schritt umfasst:
(ix) Verteilen des Rückführflüssigkeitsstroms (d) vor dem Schritt (iv).

12. Verfahren nach einem der Ansprüche 9 bis 11, das weiterhin den folgenden Schritt umfasst:
(x) Verteilen des Rückführdampfstroms (e) vor dem Schritt (iv).

13. Verfahren nach einem der Ansprüche 9 bis 12, das weiterhin den folgenden Schritt umfasst:
(xi) unmittelbares Speichern des Zufuhrstroms (a) in einem Speichergefäß nach dem Schritt (viii).

14. Verfahren nach einem der Ansprüche 9 bis 13, das weiterhin den folgenden Schritt umfasst:
(xii) wenigstens teilweises Kondensieren des Abdampfstroms (b) unter Verwendung eines ersten Wärmetauschers (6), was einen kondensierten Abdampfstrom (b1) ergibt, und Wiedereinführen des kondensierten Abdampfstroms (b1) in dem Schritt (v).

15. Verfahren nach einem der Ansprüche 9 bis 14, das weiterhin den folgenden Schritt umfasst:
(xiii) wenigstens teilweises Kühlen des Frischflüssigkeitsstroms (c) unter Verwendung eines zweiten Wärmetauschers vor dem Schritt (i).

## Revendications

1. Dispositif d'alimentation pour préparer un courant d'alimentation (a) pour une polymérisation en solution, comprenant une cuve d'alimentation (1), la cuve d'alimentation (1) comprenant :
- une zone supérieure (2) et une zone inférieure (3) ;
- une sortie de courant d'alimentation sous la forme d'une sortie d'alimentation (4) configurée pour soutirer le courant d'alimentation (a), la sortie de courant d'alimentation (4) étant positionnée dans la zone inférieure (3) ;
- une sortie de courant de vapeur résiduaire sous la forme d'une sortie de déchets (5) configurée pour extraire un courant de vapeur résiduaire (b), la sortie de déchets (5) étant positionnée dans la zone supérieure (2) ;
- un premier échangeur de chaleur (6) positionné sous la zone supérieure (2) ;
- un absorbeur (7) positionné sous le premier échangeur de chaleur (6) ;
- une entrée de courant de liquide neuf sous la forme d'une première entrée (8) configurée pour introduire un courant de liquide neuf (c) dans ou sur le dessus de l'absorbeur (7), la première entrée (8) étant positionnée au niveau de l'absorbeur (7) ;
- une entrée de courant de liquide de recyclage sous la forme d'une deuxième entrée (9) configurée pour introduire un courant de liquide de recyclage (d), la deuxième entrée (9) étant positionnée en dessous de la première entrée (8) ; et
- une entrée de courant de vapeur de recyclage sous la forme d'une troisième entrée (10) configurée pour introduire un flux de vapeur de recyclage (e), la troisième entrée (10) étant positionnée en dessous de la deuxième entrée (9) et au-dessus de la sortie d'alimentation (4).

2. Dispositif d'alimentation selon l'une quelconque des revendications précédentes, comprenant en outre :
- une cuve de stockage du courant d'alimentation configurée pour stocker le courant d'alimentation (a) positionnée en aval de la sortie d'alimentation (4).

3. Dispositif d'alimentation selon l'une quelconque des revendications précédentes, la deuxième entrée (9) comprenant en outre un dispositif de pulvérisation configuré pour pulvériser l'au moins un courant de liquide de recyclage (d) dans la cuve d'alimentation (1).

4. Dispositif d'alimentation selon l'une quelconque des revendications précédentes, la cuve d'alimentation (1) comprenant en outre un premier distributeur (11) positionné au-dessus de la deuxième entrée (9) et un deuxième distributeur (12) positionné en dessous de la deuxième entrée (9).

5. Dispositif d'alimentation selon l'une quelconque des revendications 1 et 2 précédentes, la deuxième entrée (9) étant positionnée au niveau de l'absorbeur (7).

6. Dispositif d'alimentation selon l'une quelconque des revendications précédentes, la troisième entrée (10) étant située dans la zone inférieure (3) et la troisième entrée (10) comprenant en outre un tuyau de distribution (13) s'étendant dans la zone inférieure (3).

7. Dispositif d'alimentation selon l'une quelconque des revendications précédentes, la cuve d'alimentation (1) comprenant en outre un troisième distributeur (14) situé au-dessus de la troisième entrée (10).

8. Ensemble réacteur de polymérisation en solution comprenant un dispositif d'alimentation selon l'une quelconque des revendications précédentes.

9. Procédé de préparation d'un courant d'alimentation (a) pour une polymérisation en solution dans une cuve d'alimentation (1), le courant d'alimentation (a) comprenant au moins un solvant, au moins un réactif et éventuellement de l'hydrogène, le procédé comprenant les étapes suivantes :
(i) la fourniture d'au moins un courant de liquide neuf (c) comprenant l'au moins un solvant et éventuellement l'au moins un réactif ;
(ii) la fourniture d'au moins un courant de liquide de recyclage (d) comprenant l'au moins un solvant et l'au moins un réactif ;
(iii) la fourniture d'au moins un courant de vapeur de recyclage (e) comprenant l'au moins un réactif ;
(iv) la mise en contact de l'au moins un courant de vapeur de recyclage (e) avec l'au moins un courant de liquide de recyclage (d) pour obtenir un courant de liquide de recyclage en contact (d1) et un courant de vapeur de recyclage en contact (e1) ;
(v) la mise en contact du courant de vapeur recyclée en contact (e1) avec l'au moins un courant de liquide neuf (c) pour obtenir un courant de liquide neuf en contact (c1) et un courant de vapeur résiduaire (b) ;
(vi) la combinaison du courant de liquide neuf en contact (c1) avec le courant de liquide recyclé en contact (d1) pour obtenir le courant d'alimentation (a) ;
(vii) le soutirage du courant de vapeur résiduaire (b) par une sortie de déchets (5) située dans une zone supérieure (2) de la cuve d'alimentation (1) ;
(viii) le soutirage de la cuve d'alimentation (a) par une sortie d'alimentation (4) positionnée dans une zone inférieure (3) de la cuve d'alimentation (1),
à l'étape (i), l'au moins un courant de liquide neuf (c) étant fourni par une première entrée (8) dans ou sur le dessus d'un absorbeur (7), la première entrée (8) étant positionnée au niveau de l'absorbeur (7),
à l'étape (ii), l'au moins un courant de liquide recyclé (d) étant fourni par une deuxième entrée (9), la deuxième entrée (9) étant positionnée en dessous de la première entrée (8),
à l'étape (iii), l'au moins un courant de vapeur de recyclage (e) étant fourni par une troisième entrée (10), la troisième entrée (10) étant positionnée en dessous de la deuxième entrée (9) et au-dessus de la sortie d'alimentation (4).

10. Procédé selon la revendication 9, l'étape (vi) étant réalisée dans l'étape (v) de telle sorte que le courant de liquide neuf en contact (c1) soit également en contact avec le courant de vapeur de recyclage (e).

11. Procédé selon l'une quelconque des revendications 9 et 10, comprenant en outre l'étape suivante :
(ix) la distribution du courant de liquide recyclé (d) avant l'étape (iv).

12. Procédé selon l'une quelconque des revendications 9 à 11, comprenant en outre l'étape suivante :
(x) la distribution du courant de vapeur recyclée (e) avant l'étape (iv).

13. Procédé selon l'une quelconque des revendications 9 à 12 précédentes, comprenant en outre l'étape suivante :
(xi) le stockage temporaire du courant d'alimentation (a) dans une cuve de stockage après l'étape (vii).

14. Procédé selon l'une quelconque des revendications 9 à 13 précédentes, comprenant en outre l'étape suivante :
(xii) la condensation au moins partielle du courant de vapeur résiduaire (b) à l'aide d'un premier échangeur de chaleur (6) produisant un courant de vapeur résiduaire condensée (b1) et la réintroduction du courant de vapeur résiduaire condensée (b1) à l'étape (v).

15. Procédé selon l'une quelconque des revendications 9 à 14 précédentes, comprenant en outre l'étape suivante :
(xiii) le refroidissement au moins partiel du courant de liquide neuf (c) à l'aide d'un deuxième échangeur de chaleur avant l'étape (i).
